# FASCICULE DE BREVET EUROPEEN

(11) **EP 0 438 949 B1**
(45) Date de publication et mention de la délivrance du brevet: **16.04.1997**
(21) Numéro de dépôt: 90420547.3
(22) Date de dépôt: 14.12.1990
(51) Int. Cl.: C08F 220/06, B01F 17/52

(54) **Agent de stabilisation non toxique des suspensions aqueuses de silico-aluminates de sodium**
Nichttoxisches Stabilisierungsmittel für wässrige Nitriumsilikonluminat-Suspensionen
Non-toxic stabilizing agent for aqueous suspensions of sodium silico-aluminates

(30) Priorité: 18.12.1989 FR 8917020
(43) Date de publication de la demande: 31.07.1991
(73) Titulaire: COATEX S.A., F-69300 Caluire (FR)
(72) Inventeur: Grondin, Henri, F-69004 Lyon (FR); Moro, Jean, F-01600 Trevoux (FR); Rousset, Jacky, F-01990 St-Trivier-Sur-Moignans (FR)

(56) Documents cités:
- EP-A- 0 097 808
- EP-A- 0 238 404

## Description

La présente invention a pour objet des agents de stabilisation permettant de préparer des suspensions de silico-aluminates de sodium encore appelés zéolithes, ayant une bonne stabilité au stockage et au cours des transports.

Les silico-aluminates de sodium sont aujourd'hui de plus en plus utilisés dans les formulations de compositions détergentes pour remplacer les polyphosphates qui sont responsables, lors de leur rejet dans le milieu naturel, des phénomènes d'eutrophisation des lacs et des rivières.

Or, pour faciliter leur mise en oeuvre au moment de la fabrication des compositions détergentes, la livraison de ces zéolithes est de plus en plus effectuée sous forme de suspensions aqueuses à environ 50% de zéolithes anhydres, qui doivent avoir une bonne stabilité au cours du stockage et pendant les transports.

Depuis longtemps déjà, l'homme de l'art propose des adjuvants permettant d'obtenir des suspensions stables de zéolithes. C'est ainsi que les brevets FR 2 287 504 et EP 0 294 694 décrivent la préparation de suspensions de zéolithes stabilisées avec des tensio-actifs appartenant notamment à la famille des alcools gras en C₁₆-C₁₈ éthoxylés avec 1 à 8 moles d'oxyde d'éthylène. Cette solution présente l'inconvénient de mettre en oeuvre des quantités très importantes d'agent stabilisant, de l'ordre de 0,5 à 6% par rapport à la suspension.

Dans le brevet FR 2 512 690, les agents stabilisants évoqués sont des polymères hydroxylés issus de l'amidon qui se révèlent efficaces mais doivent être utilisés en quantité importante comprise entre 0,4 et 2,5 % en poids et préférentiellement comprise entre 1,4 et 1,5 % et qui, de plus, parce que naturellement biodégradables, nécessitent l'addition complémentaire de bactéricides préjudiciables pour l'environnement au moment des rejets.

Le brevet DE 3 021 295 décrit une composition stable de zéolithes contenant 15 % d'acide nitrilotriacétique sous forme salifiée, produit dont les rejets sont aujourd'hui fortement réglementés, voire interdits dans certains pays.

Les brevets FR 2 455 479 et FR 2 461 516 revendiquent comme agents stabilisants des polymères qui présentent l'inconvénient, soit de provoquer des dégagements d'ammoniac dans le milieu fortement alcalin (pH 10 à 13) des zéolithes dans le cas du brevet FR 2 455 479, soit de ne pas assurer une bonne stabilité au cours de la préparation, du stockage et du transport des suspensions de zéolithes à des températures situées entre 50° C et 60° C (FR 2 461 516).

Le brevet EP 097808 revendique quant à lui des copolymères faiblement réticulés constitués de 30 à 99,9 % d'un monomère acrylique au moins partiellement neutralisé qui présentent l'inconvénient d'apporter également, dans le milieu fortement alcalin des zéolithes, des ions alcalins qui peuvent être néfastes à la stabilité du milieu, tout comme sont inefficaces les copolymères décrits dans les brevets EP 0 280 541 et GB 1 153 022 totalement insolubles quel que soit le pH.

Un autre type de copolymère comprenant des esters possédant des groupes polyalkylène glycol sont révélés par le brevet EP 0 238404 en vue de mieux prévenir les milieux épaissis de l'effet néfaste des sels dissous.

Enfin, le brevet JP 61-101413 décrit des compositions polymériques à base de styrène, styrène sulfoné et d'anhydride maléïque réticulées. Ces polymères sont en général préparés en milieu solvant du type aromatique et de telles compositions seront difficiles à obtenir très pures et risquent de contenir des traces de solvant et de styrène, monomère toxique, qui sont sources de pollution de l'environnement.

### Sommaire de l'invention

Forte des inconvénients précités, la Demanderesse, poursuivant ses recherches, a trouvé et mis au point des copolymères acryliques acides réticulés non toxiques permettant de préparer des suspensions aqueuses de zéolithes dont la stabilité au stockage est considérablement améliorée, et ceci pour des doses d'utilisation en addititf beaucoup plus faibles que dans le cas des produits selon l'art antérieur.

Selon l'invention, les copolymères stabilisants des suspensions aqueuses de zéolithes se caractérisent en ce qu'ils sont réticulés, solubles dans l'eau au moins à des pH de 7 ou plus et sont essentiellement constitués :
(a) d'au moins un monomère acrylique non réticulant disposant d'une fonction acide carboxylique choisi parmi les acides acrylique et méthacrylique,
(b) éventuellement, d'au moins un monomère acrylique non réticulant choisi parmi les esters non hydrophiles, les amides et/ou les nitriles des acides acrylique et/ou méthacrylique,
c) d'au moins un monomère réticulant possédant au moins deux doubles liaisons acryliques et/ou allyliques et/ou vinyliques,
(d) éventuellement d'au moins un monomère réticulant au moins bifonctionnel comportant au plus une double liaison et au moins une autre fonction chimique réactive à l'égard des autres monomères à fonctions acides ou amides des types (a) et (b), le cumul des monomères réticulants de types (c) et (d) constituant de 1 à 5 %, de préférence de 1 à 4 % en poids par rapport à la masse totale des monomères.

Selon l'invention, le monomère acrylique de type (b) peut être préférentiellement choisi dans le groupe constitué par les acrylates de méthyle, d'éthyle, de propyle, de butyle, d'octyle, ainsi que les méthacrylates correspondants, l'acrylamide, l'acrylonitrile, ou les dérivés méthacryliques correspondants, les acrylamides ou méthacrylamides N-substitués.

Selon l'invention, le monomère réticulant possédant au moins deux doubles liaisons de type (c) est choisi préférentiellement dans le groupe constitué par le diméthacrylate d'éthylèneglycol, l'acrylate d'allyle, le méthylène-bis-acrylamide, le tétrallyloxyéthane, le triallylcyanurate, les éthers allyliques obtenus à partir de polyols tels que le pentaérythritol, le sorbitol, le sucrose.

Selon l'invention, l'autre fonction chimique réactive du monomère réticulant de type (d) peut être choisie parmi les fonctions hy-droxyles, méthylols, isocyanates, amines, époxy, carbonate d'alkylène.

Comme produits répondant à cette définition, on peut citer par exemple les méthacrylate ou acrylate d'éthylène glycol, le méthylolacrylamide, le méthylolméthacrylamide, le méthacrylate de glycidyle.

Le copolymère selon l'invention peut être obtenu selon toutes les techniques connues de l'homme de l'art, par polymérisation radicalaire ou ionique en solution, en émulsion directe, en émulsion inverse, en masse ou par polymérisation par précipitation dans un solvant approprié

Ce copolymère contient, exprimé en pour cent en poids par rapport à sa masse totale :
a) les acides acrylique et/ou méthacrylique qui constituent avantageusement de 15 % à 99 % de la composition monomérique, et préférentiellement de 30 % à 99 % de cette composition,
b) éventuellement, les monomères acryliques non réticulants choisis parmi les esters non hydrophiles, amides ou nitriles des acides acrylique et/ou méthacrylique qui constituent avantageusement de 0 à 85 % de la composition monomérique, et préférentiellement de 0 à 60 % de cette composition.
c) la somme des monomères réticulants qui constitue de 1 % à 5 % de la composition monomérique, et préférentiellement de 1 à 4 % de cette composition.

Le copolymère obtenu selon les techniques connues de l'homme de l'art se présente généralement, selon le procédé de polymérisation utilisé, sous la forme d'une émulsion dans l'eau, ou d'une poudre, ou d'une solution, ou d'une émulsion inverse ; il est en général insoluble dans l'eau à l'état acide mais il se solubilise dans l'eau et développe son activité stabilisante des suspensions de zéolithes dès lors que les groupements carboxyliques sont totalement ou partiellement neutralisés, l'agent de neutralisation étant préférentiellement l'hydroxyde de sodium, de lithium, de potassium, d'ammonium, de calcium, de magnésium, les amines ou des combinaisons de ces agents, ou encore l'alcalinité naturelle du milieu lorsqu'il est mis en oeuvre dans une suspension de zéolithes qui est alcaline de par son procédé de fabrication.

Les copolymères selon l'invention sont mis en oeuvre dans les suspensions de silico-aluminates de sodium (chargées à 50% de matières sèches) à raison d'au plus 0,4% en poids de sec par rapport à la masse totale, et préférentiellement entre 0,05% et 0,3%.

### Exemple 1

Cet exemple regroupe les essais 1a, 1b et 1c qui illustrent un mode de préparation d'adjuvants par copolymérisation en émulsion directe selon un procédé bien connu de l'homme de l'art.

Pour ce faire, dans un réacteur muni d'une agitation, d'un réfrigérant ascendant, d'un dispositif pour introduction des monomères, on place :

| **Charge I** | |
|---|---|
| Eau désionisée | 1000 g |
| Lauryléthersulfate de sodium à 28% | 15,6 g |
| Persulfate d'ammonium | 1,1 g |
| Métabisulfite de sodium | 0,11 g |

Le milieu ainsi formé est chauffé à 68°C, puis on ajoute en deux heures environ et en maintenant la température à 72-75°C une charge II constituée de :

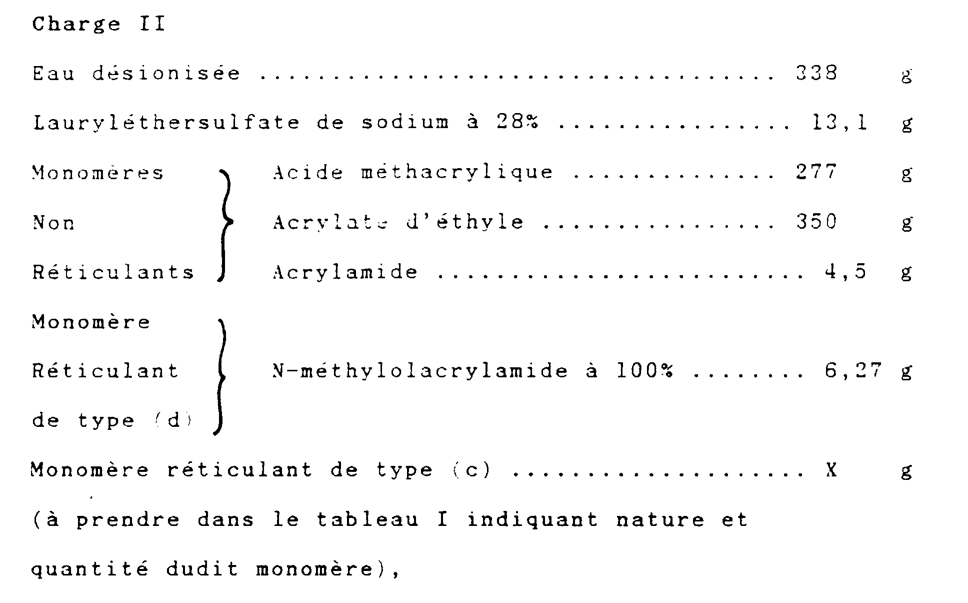

l'ensemble des constituants de la charge II étant soumis à une agitation de façon à produire une préémulsion homogène des réactifs.

A la fin de l'addition dans le réacteur de la charge II, on monte la température à 80°C et on maintient l'ensemble du contenu du réacteur à 80-82°C pendant 30 minutes pour terminer la conversion des monomères.

On refroidit ensuite à 20°C, on ajuste les matières sèches à 30% par introduction d'eau, puis on recueille dans un flacon un liquide dont les caractéristiques sont les suivantes :
- émulsion bleutée
- absence de précipité dans le liquide
- extrait sec : 30% (mesuré après séchage de 1 g pendant 24 heures à 105°C)
- produit soluble dans l'eau en milieu alcalin
- pH = 4 environ.

Les essais 1a et 1b représentent des exemples selon l'invention obtenus avec deux systèmes réticulants différents, l'exemple 1c obtenu sans réticulant de type (c) appartenant, lui, à l'art antérieur.

Le tableau I ci-après donne les natures et les quantités des différents agents réticulants utilisés ainsi que leur pourcentage par rapport à 100 g de monomères.

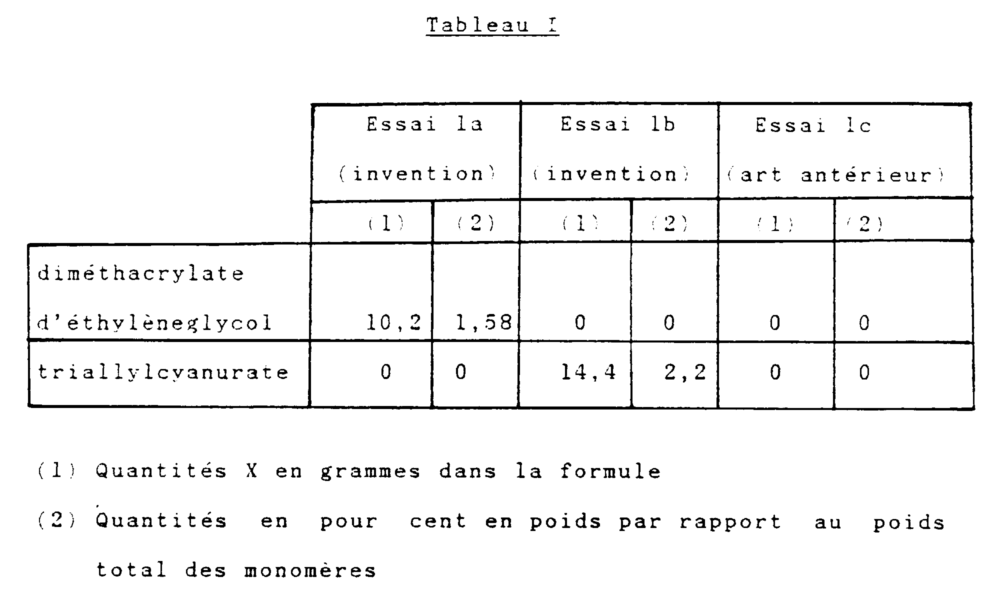

### Exemple 2

Cet exemple regroupe les essais 2a et 2b qui illustrent d'autres compositions polymériques dénommées additif dans le tableau II, obtenues selon un autre mode de polymérisation en milieu solvant non toxique avec des monomères différents de l'exemple 1.

Pour ce faire, on charge dans un réacteur de 2 litres équipé d'un agitateur, d'un réfrigérant ascendant et d'une boule à brome les produits suivants :

| | |
|---|---|
| Acide acrylique à 100% (monomère non réticulant) | 99 g |
| Carbonate de potassium | 4,8 g |
| Acétate d'éthyle anhydre | 900 ml |
| Monomère réticulant (voir essais 2a et 2b) | X g |

On porte la température du mélange à 80°C puis on ajoute par l'intermédiaire de la boule à brome une solution d'initiateurs de polymérisation constituée de:

| | |
|---|---|
| Acétate d'éthyle anhydre | 50 ml |
| Peroxyde de lauroyle | 0,32 g |

On observe après trois minutes une légère exothermie tandis que la solution de monomères, jusqu'alors limpide, se trouble à la suite de la formation d'un polymère insoluble dans le milieu réactionnel.

On laisse monter puis on contrôle la température à 82-83°C et on la maintient dans cet intervalle pendant 5 heures. On refroidit ensuite à 20°C.

On obtient alors une suspension de polymère en poudre dans l'acétate d'éthyle, qui est filtrée sur Buchner de façon à séparer le maximum de solvant. Le gâteau obtenu est ensuite séché pendant 12 heures dans une étuve ventilée maintenue à 50°C.

Le produit obtenu après séchage est une poudre fine, blanche, contenant plus de 99,5% de copolymère constitué d'acide polyacrylique réticulé.

**Essai 2a :** cet essai, réalisé dans les conditions décrites ci-dessus, contenait comme réticulant 1 g de pentaérythritol triallylé, soit 1% d'agent réticulant par rapport à l'acide acrylique engagé constituant le monomère non réticulant.

**Essai 2b**: cet essai, qui constitue l'art connu, a été réalisé dans les mêmes conditions sans agent réticulant.

### Exemple 3

Cet exemple illustre l'aptitude des polymères obtenus selon l'invention à préparer des suspensions aqueuses stables au stockage et au transport de silico-aluminates de sodium encore appelés zéolithes et, plus particulièrement les zéolithes A, dont le zéolithe 4A est de plus en plus utilisée dans les détergents comme substitut des polyphosphates. Sa formule globale est Na₂O-Al₂O₃-2-SiO₂-4,5H₂O.

Pour ce faire, on a préparé des suspensions de zéolithe 4A à partir d'un gâteau de filtration industriel contenant 50,5% de matière sèche, mesurée par perte de poids pendant deux heures à 800°C; ce gâteau présente l'aspect d'un liquide très fluide lorsqu'il est maintenu sous agitation, mais sédimente très rapidement et se sépare en deux phases, l'une liquide et l'autre conduisant à un sédiment très dur dès qu'il est au repos lorsqu'il ne contient aucun stabilisant. Les particules de zéolithes ont un diamètre compris entre 1 et 10 µ et la suspension a un pH égal à 12 environ.

### Mode opératoire

Dans un bécher de 5 litres, on verse 2,5 litres de la suspension homogène et fluide de zéolithes ci-dessus et, à l'aide d'une agitation type Rayneri, on incorpore différents agents stabilisants et on maintient l'agitation pendant 15 minutes de façon à obtenir un mélange intime de la suspension et de l'agent testé.

La suspension obtenue est immédiatement divisée en cinq échantillons de 500 ml conservés dans des récipients transparents et hermétiques destinés à subir un cycle de vieillissement.

Pendant ce cycle de vieillissement, un des cinq échantillons et un seul est examiné puis jeté à chacune des cinq étapes suivantes:
- à la fin de la préparation, cette étape constituant le temps t = 0,
- après 4 jours à 50°C en stockage statique, cette étape constituant le temps t = 4,
- après 4 jours à 50°C plus 2 jours à 20°C, cette étape constituant le temps t = 4 + 2,
- après 4 jours à 50°C plus 5 jours à 20°C, cette étape constituant le temps t = 4 + 5,
- après 4 jours à 50°C plus 11 jours à 20°C, cette étape constituant le temps t = 4 + 11.

A chaque examen sont évalués:
- le pourcentage volumique de liquide surnageant,
- le pourcentage volumique de sédiment,
- l'aptitude de la suspension à être transvasée.

On admettra qu'un additif est d'autant plus efficace qu'il:
- est utilisé à faible dose,
- conduit à des pourcentages de liquide surnageant et de sédiment inexistants ou faibles,
- donne une suspension qui peut être facilement et totalement transvasée dans un bécher de 500 ml.

Le tableau II récapitule la liste des additifs testés et les résultats obtenus.

Remarque: Les quantités d'additifs indiquées dans le tableau II sont exprimées en pourcentage en poids d'additifs secs pour 100 grammes de suspensions de zéolithes à 50,5%; ces quantités sont toujours choisies de telle sorte que la viscosité de la suspension soit inférieure à 2000 centipoises (mesurée à l'aide d'un viscosimètre Brookfield RVT, mobile n° 3 à 20 tours par minute), ce qui correspond à un produit facilement pompable industriellement.

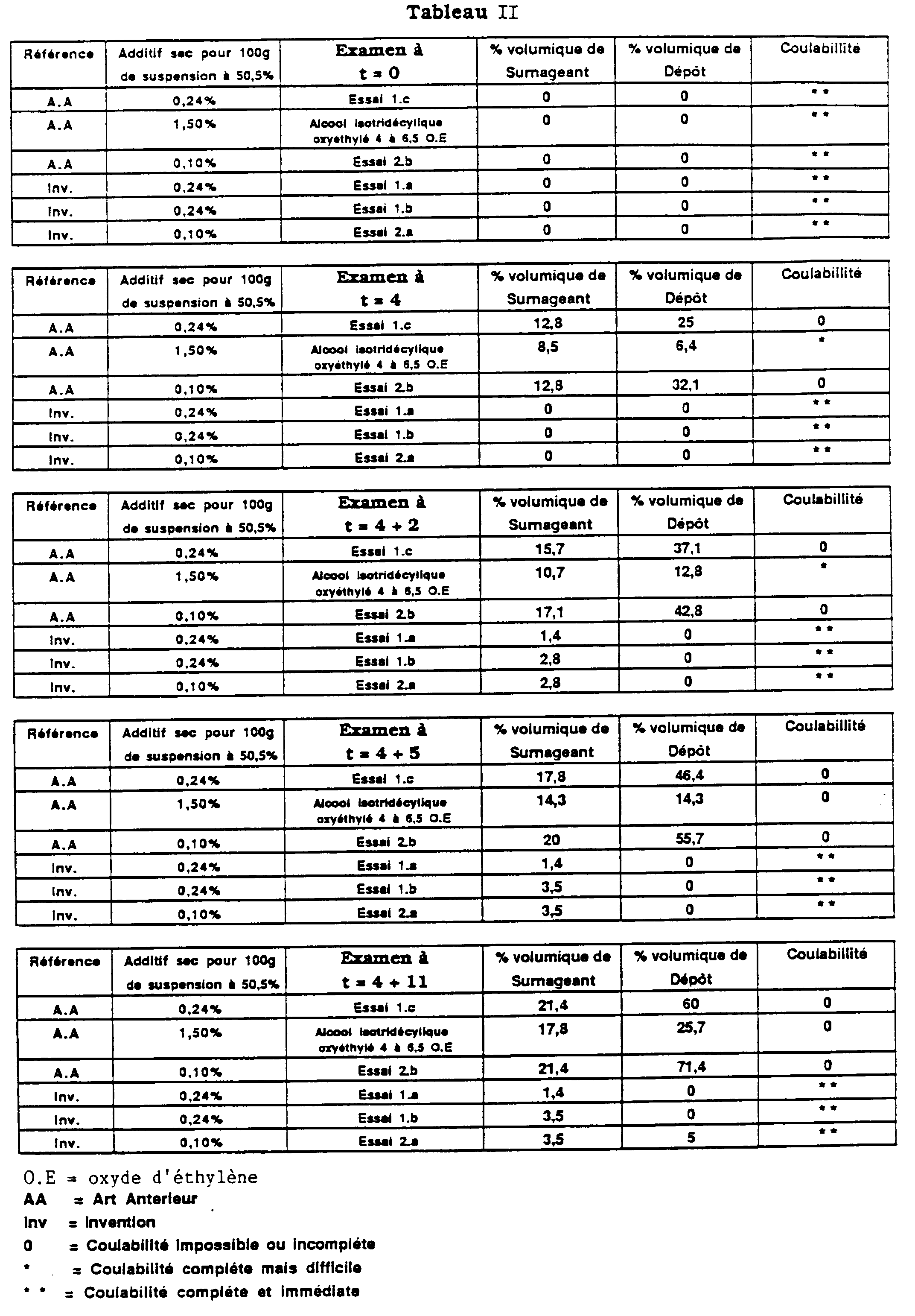

Ainsi, il apparaît nettement dans ce tableau II que les copolymères acryliques selon l'invention utilisés à faibles doses, dans tous les cas à moins de 0,4% de copolymère sec par rapport à la suspension de zéolithes, permettent d'obtenir des suspensions extrêmement stables, et dont la stabilité n'est pas altérée par un stockage de plusieurs jours à 50°C et/ou à température ambiante.

### Exemple 4

Cet exemple a pour objet de montrer le caractère non toxique des produits selon l'invention.

Pour cela, des tests de toxicité ont été réalisés par voie orale sur le rat (DL 50).

Les produits obtenus dans les essais 1a et 2a ont donné des résultats de DL 50 supérieurs à 2000 mg/kg, ce qui correspond à des produits de très faible toxicité.

### Exemple 5

Cet exemple illustre le comportement au cours du transport d'une suspension de zéolithes stabilisée avec un additif selon l'invention et constituant l'essai 1a de l'exemple 1.

Pour cela, on a préparé 150 kg d'une suspension de zéolithes de la même manière que dans l'exemple 3, en utilisant comme agent stabilisant 0,24%, soit 0,36 kg exprimé en sec du copolymère 1a.

Cette suspension a été transférée dans un fût de 120 litres que l'on a expédié par camion à une usine utilisatrice distante de 1350 kilomètres du lieu de préparation. Les temps de transport et de stockage avant utilisation représentaient 9 jours au total.

Au moment de la mise en oeuvre, le produit a pu être pompé très facilement et aucun dépôt n'a été constaté au fond du récipient, confirmant ainsi la bonne aptitude au transport des suspensions de zéolithes stabilisées avec des copolymères selon l'invention.

## Revendications

1. Copolymères stabilisants des suspensions aqueuses de silico-aluminates de sodium ou zéolithes, caractérisés en ce qu'ils sont réticulés, solubles dans l'eau au moins à des pH de 7 ou plus, et constitués :
a) de 15 à 99 % en poids, par rapport à la masse totale des monomères, d'un monomère acrylique non réticulant disposant d'une fonction acide carboxylique, choisi parmi les acides acrylique et méthacrylique,
b) de 0 à 85 % en poids, par rapport à la masse totale des monomères, d'au moins un monomère acrylique non réticulant choisi parmi les esters non hydrophiles, tels que les acrylates de méthyle, d'éthyle, de propyle, de butyle, d'octyle ainsi que les méthacrylates correspondants, et/ou les amides et/ou les nitriles des acides acrylique et/ou méthacrylique, tels que l'acrylamide, l'acrylonitrile ou les dérivés méthacryliques correspondants, les acrylamides ou méthacrylamides N-substitués,
c) d'au moins un monomère réticulant possédant au moins deux doubles liaisons acryliques et/ou allyliques et/ou vinyliques,
d) éventuellement, d'au moins un monomère réticulant au moins bifonctionnel comportant au plus une double liaison et au moins une autre fonction chimique réactive à l'égard des autres monomères à fonctions acides, amides ou nitriles de types (a) et (b), le cumul des monomères réticulants de types (c) et (d) constituant de 1 à 5 %, de préférence de 1 à 4 % en poids par rapport à la masse totale des monomères.

2. Copolymères stabilisants selon la revendication 1 caractérisés en ce que le monomère réticulant de type (c) est choisi dans le groupe constitué par le diméthacrylate d'éthylèneglycol, l'acrylate d'allyle, le méthylène-bis-acrylamide, le tétrallyloxyéthane, le triallylcyanurate, les éthers allyliques obtenus à partir de polyols tels que le pentaérythritol, le sorbitol, le sucrose.

3. Copolymères stabilisants selon l'une des revendications 1 à 2 caractérisés en ce que l'autre fonction chimique réactive du monomère réticulant de type (d) est choisie parmi les fonctions hydroxyles, méthylols, isocyanates, amines, époxy, carbonate d'alkylène.

4. Copolymères stabilisants selon l'une des revendications 1 à 3 caractérisés en ce qu'ils contiennent, par rapport à la masse totale des monomères, de 30 % à 99 % en poids d'acides acrylique et/ou méthacrylique.

5. Copolymères stabilisants selon l'une des revendications 1 à 4 caractérisés en ce qu'ils contiennent, par rapport à la masse totale des monomères, de 0 à 60 % en poids de l'un au moins des monomères acryliques non réticulants de type b).

## Patentansprüche

1. Copolymer zum Stabilisieren von wäßrigen Natriumaluminiumsilicatsuspensionen oder Zeolithen, dadurch gekennzeichnet, daß sie vernetzt sind, in Wasser bei einem pH-Wert von mindestens 7 oder mehr löslich sind und bestehen aus:
a) 15 bis 99 Gew.-%, bezogen auf das Gesamtgewicht an Monomeren, eines nicht vernetzenden Acrylmonomer, das eine Carbonsäurefunktion trägt, ausgewählt aus Acryl- und Methacrylsäure,
b) 0 bis 85 Gew.-%, bezogen auf das Gesamtgewicht an Monomeren, mindestens eines nicht vernetzenden Acrylmonomers, ausgewählt aus nicht hydrophilen Estern, wie Acrylsäuremethyl-, -ethyl-, -propyl-, -butyl-, -octylester sowie den entsprechenden Methacrylsäureestern, und/oder Acrylsäure- und/oder Methacrylsäureamiden und/oder -nitrilen, wie Acrylamid, Acrylnitril oder den entprechenden Methacrylsäurederivaten, N-substituierten Acrylamiden oder Methacrylamiden,
c) mindestens einem vernetzenden Monomer, das mindestens zwei acrylische und/oder allylische und/oder vinylische Doppelbindungen besitzt,
d) gegebenenfalls mindestens einem, zumindest bifunktionellen, vernetzenden Monomer, das höchstens eine Doppelbindung und mindestens eine andere chemische Funktion trägt, die hinsichtlich der anderen Monomere mit Säure-, Amid- oder Nitril-Funktionen der Typen a) und b) reaktiv ist, wobei die Gesamtheit der vernetzenden Monomere der Typen c) und d) 1 bis 5 Gew.-%, vorzugsweise 1 bis 4 Gew.-%, bezogen auf das Gesamtgewicht der Monomere, beträgt.

2. Copolymer zum Stabilisieren nach Anspruch 1, dadurch gekennzeichnet, daß das vernetzende Monomer vom Typ (c) ausgewählt ist aus der Gruppe, bestehend aus Ethylenglycoldimethacrylat, Allylacrylat, Methylenbisacrylamid, Tetraallyloxyethan, Triallylcyanurat, Allylethern erhalten ausgehend von Polyolen, wie Pentaerythritol, Sorbitol, Saccharose.

3. Copolymer zum Stabilisieren nach einem der Ansprüche 1 bis 2, dadurch gekennzeichnet, daß die andere reaktive chemische Funktion des vernetzenden Monomers vom Typ (d) ausgewählt ist aus Hydroxyl-, Methylol-, Isocyanat-, Amin-, Epoxyfunktionen, Alkylencarbonatfunktionen.

4. Copolymer zum Stabilisieren nach einem der Ansprüche 1 bis 3, dadurch gekennzeichnet, daß sie, bezogen auf das Gesamtgewicht an Monomeren, 30 bis 99 Gew.-% Acryl- und/oder Methacrylsäure enthalten.

5. Copolymer zum Stabilisieren nach einem der Ansprüche 1 bis 4, dadurch gekennzeichnet, daß sie, bezogen auf das Gesamtgewicht an Monomeren, 0 bis 60 Gew.-% von mindestens einem der nicht vernetzenden Acrylmonomere vom Typ b) enthalten.

## Claims

1. Copolymers capable of stabilising aqueous suspensions of silico-aluminates of sodium or zeolites, characterised in that they are cross-linked, soluble in water at least at pH values of 7 or more, and consist of:
a) from 15 to 99% by weight relative to total mass of monomers of a non-cross-linking acrylic monomer having a carboxylic acid function, selected from among the acrylic and methacrylic acids,
b) from 0 to 85% by weight relative to total mass of monomers of at least one non-cross-linking acrylic monomer selected from among the non-hydrophilic esters such as the acrylates of methyl, ethyl, propyl, butyl, octyl as well as the corresponding methacrylates, and/or the amides and/or the nitriles of acrylic and/or methacrylic acids, such as acrylamide, acrylonitrile or the corresponding methacrylic derivatives, the N-substituted acrylamides or methacrylamides,
c) at least one cross-linking monomer having at least two double acrylic and/or allylic and or vinylic bonds,
d) possibly, at least one cross-linking monomer that is at least bi-functional having at most one double bond and at least one other reactive chemical function with respect to the other monomers having acid functions, amides or nitriles of types (a) and (b), the combined proportion of cross-linking monomers of types (c) and (d) representing 1 to 5% and preferably 1 to 4% by weight relative to the total mass of monomers.

2. Stabilising copolymers as claimed in claim 1, characterised in that the cross-linking monomer of type (c) is selected from the group comprising dimethacrylate of ethylene glycol, allyl acrylate, methylene-bisacrylamide, tetrallyloxyethane, triallylcyanurate, the allylic ethers obtained from polyols such as pentaerythritol, sorbitol, sucrose.

3. Stabilising copolymers as claimed in one of claims 1 to 2, characterised in that the other reactive chemical function of the cross-linking monomer of type (d) is selected from among the hydroxyl, methylol, isocyanate, amine, epoxy, alkylene carbonate functions.

4. Stabilising copolymers as claimed in one of claims 1 to 3, characterised in that they contain, relative to the total mass of monomers, from 30 to 99% by weight of acrylic and/or methacrylic acids.

5. Stabilising copolymers as claimed in one of claims 1 to 4, characterised in that they contain, relative to the total mass of monomers, from 0 to 60% by weight of at least one of the non-cross-linking acrylic monomers of type (b).
